(19) Europäisches Patentamt
European Patent Office
Office européen des brevets

(11) EP 4 228 343 A1

(12) **EUROPEAN PATENT APPLICATION**

(43) Date of publication:
16.08.2023 Bulletin 2023/33

(21) Application number: 22156592.2

(22) Date of filing: 14.02.2022

(51) International Patent Classification (IPC):
*H04W 56/00* (2009.01)

(52) Cooperative Patent Classification (CPC):
H04W 56/0015; H04W 56/005

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Nokia Technologies Oy
02610 Espoo (FI)

(72) Inventors:
• Abreu, Renato Barbosa
9000 Aalborg (DK)

• Jacobsen, Thomas Haaning
9400 Nørresundby (DK)
• Keshavamurthy, Prajwal
81241 Munich (DE)
• Kolding, Troels Emil
9270 Klarup (DK)
• Andrés Maldonado, Pilar
9000 Aalborg (DK)
• Hviid, Jan Torst
9270 Klarup (DK)

(74) Representative: Kolster Oy Ab
Salmisaarenaukio 1
P.O. Box 204
00181 Helsinki (FI)

(54) **TIMING UNCERTAINTY IN SIDELINK TIME SYNCHRONIZATION**

(57)    According to an aspect, there is provided an apparatus configured to perform the following. The apparatus establishes itself as a timing source terminal device for sidelink communication and estimates a first time uncertainty caused by the apparatus for sidelink communication. Then, the apparatus causes transmission of information on at least one of the first time uncertainty and a combined time uncertainty to one or more target terminal devices. The combined time uncertainty corresponds to a combination of the first time uncertainty and a second time uncertainty. The second time uncertainty corresponds to a time uncertainty of reference time defined in reference time information.

Fig. 2

**Description**

TECHNICAL FIELD

Various example embodiments relate to wireless communications.

BACKGROUND

Sidelink is a communication paradigm in which terminal devices are able to communicate with each other directly without having to relay data via an access node. Sidelink (SL) transmissions are organized in frames identified by the direct frame number (DFN). The DFN enables a terminal device to synchronize its radio frame transmissions according to a particular SL timing reference. Terminal devices perform SL synchronization to have the same SL timing reference for SL communication among nearby terminal devices by synchronizing with a reference. For each reference synchronization source that a terminal device may select, the terminal device may be subject to a different requirement for the transmission timing error in the sidelink interface. Minimizing any timing uncertainty in the sidelink time synchronization is important for enabling successful sidelink communication.

BRIEF DESCRIPTION

According to an aspect, there is provided the subject matter of the independent claims. Embodiments are defined in the dependent claims. The scope of protection sought for various embodiments is set out by the independent claims.
The embodiments and features, if any, described in this specification that do not fall under the scope of the independent claims may be interpreted as examples useful for understanding various embodiments.

BRIEF DESCRIPTION OF THE DRAWINGS

In the following, some example embodiments will be described with reference to the accompanying drawings, in which

Figure 1 illustrates an example of a communications system to which embodiments may be applied;
Figures 2 to 6 illustrate examples of processes according to embodiments; and
Figure 7 illustrates an exemplary apparatus according to embodiments.

DETAILED DESCRIPTION OF SOME EMBODIMENTS

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), Zig-Bee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

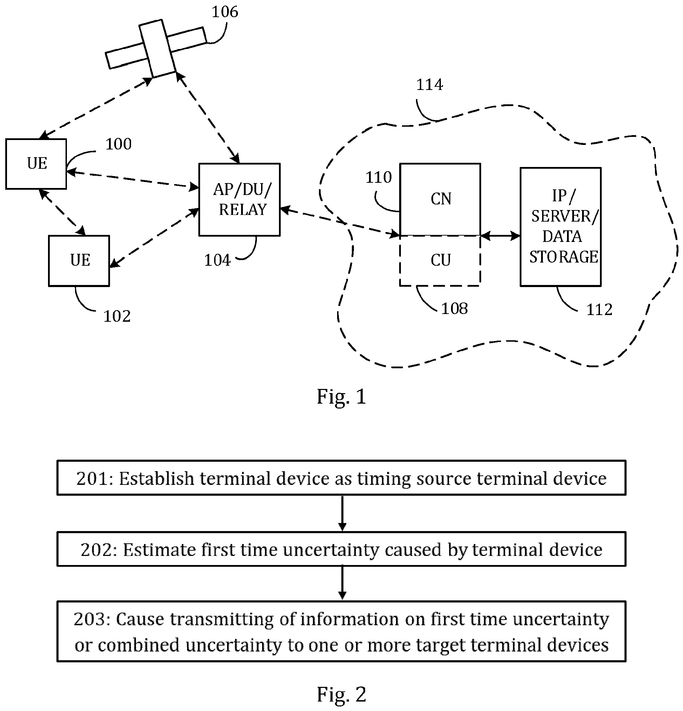

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.
The embodiments are not, however, restricted to the system given as an example but a person skilled in the art may apply the solution to other communication systems provided with necessary properties.
The example of Figure 1 shows a part of an exemplifying radio access network.
Figure 1 shows user devices 100 and 102 (equally called terminal devices) configured to be in a wireless connection on one or more communication channels in a cell with an access node (such as (e/g)NodeB) 104 providing the cell. An eNodeB or a gNodeB, are herein collectively referred to as (e/g)NodeB. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal or terminal device) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, wearable device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 1, user devices are depicted to include 2 antennas only for the sake of clarity. The number of reception and/or transmission antennas may naturally vary according to a current implementation.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as between a below 6GHz radio interface and a cmWave radio interface and/or between a below 6GHz radio interface a cmWave radio interface and an mmWave radio interface). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or the like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

5G may also utilize unlicensed spectrum, similar to WLAN or Multefire. 5G operating in unlicensed spectrum is also referred to as NR-U.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

One or both of the terminal devices 100, 102 may be configured for performing sidelink communication. Sidelink is a communication paradigm in which terminal devices are able to communicate with each other directly without having to relay data via an access node. Sidelink (SL) transmissions are organized in frames identified by the direct frame number (DFN). The DFN enables a terminal device to synchronize its radio frame transmissions according to a particular SL timing reference. Terminal devices perform SL synchronization to have the same SL timing reference for SL communication among nearby terminal devices by synchronizing with a reference. The possible synchronization references (SyncRefs) comprise Global Navigation Satellite System (GNSS), NR Cell (gNB), Evolved Universal Terrestrial Radio Access Network (EUTRAN) cell (eNB), SyncRef terminal device or an internal clock of a terminal device. Here, SyncRef terminal device is a terminal device acting as a SyncRef source that either extends the synchronization coverage of a SyncRef source (e.g., GNSS, gNB/eNB or another SyncRef UE) or uses its own internal clock as the SyncRef.

For each reference synchronization source that a terminal device may select, the terminal device would be subject to a different requirement for the transmission timing error $T_e$ in sidelink interface. The $T_e$ timing error limits are provided in the following four Tables, respectively, for the GNSS, NR cell, E-URTAN cell and SyncRef terminal device as a synchronization source.

| Frequency Range of sidelink | $T_{e\_}$ |
|---|---|
| FR1 | $12*64*T_c$ |

| Frequency Range of sidelink | SCS of SSB signals (kHz) | SCS of sidelink signals (kHz) | $T_e$ |
|---|---|---|---|
| FR1 | 15 | 15 | $14*64*T_c$ |
| | | 30 | $12*64*T_c$ |
| | | 60 | $12*64*T_c$ |
| | 30 | 15 | $10*64*T_c$ |
| | | 30 | $12*64*T_c$ |
| | | 60 | $9*64*T_c$ |

| Frequency Range of sidelink | E-UTRAN downlink bandwidth (MHz) | $T_{e\_}$ |
|---|---|---|
| FR1 | $\geq 3$ | $14*64*T_c$ |

| Frequency Range of sidelink | SCS of sidelink signals (kHz) | $T_e$ |
|---|---|---|
| FR1 | 15 | $12*64*T_c$ |
| | 30 | $8*64*T_c$ |
| | 60 | $5*64*T_c$ |

In the above Tables, FR1 denotes Frequency Range 1 (4.1 GHz to 7.125 GHz), SCS denotes subcarrier spacing, and SSB denotes a synchronization signal block. Moreover, $T_c$ is a basic timing unit which may be defined according to $T_c = 1/(\Delta f_{max} N_f)$, where $\Delta f_{max}$ and $N_f$ are defined as $\Delta f_{max} = 480 \cdot 10^3$ Hz and $N_f = 4096$.

One or both of the terminal devices 100, 102 may be SyncRef terminal devices. SyncRef terminal devices transmits SL synchronization information in sidelink synchronization signal block (S-SSB) to provide the SyncRef. This information carried in S-SSB comprises: a sidelink primary synchronization signal (S-PSS), a sidelink secondary synchronization signal (S-SSS) and physical sidelink broadcast channel (PSBCH). Here, the S-PSS and S-SSS are jointly referred to as the sidelink synchronization signal (SLSS) and are used for time and frequency synchronization. The S-PSS and S-SSS are selected out of the candidate sequences based on an SLSS identifier (ID) which represents an identifier of the SyncRef terminal device and conveys a priority of the SyncRef terminal device. PSBCH carries a master information block sidelink (MIB-SL) field which comprises a DFN, a slot index, a one-bit indicator indicating whether the SyncRef terminal device is in coverage of a network or of GNSS and time division duplex configuration.

The S-SSBs may be transmitted by SyncRef terminal devices with a fixed periodicity of 160 ms (i.e., 16 radio frames). Multiple S-SSBs per S-SSB period can be transmitted, and the number of S-SSBs transmitted is (pre-)configured depending on the SCS and the frequency range. The terminal device may select the slot in which to transmit S-SSB according to S-SSB time allocation (sl-SSB-TimeAllocation1 or sl-SSB-TimeAllocation2) which provides time-offset (sl-TimeOffsetSSB) from the start of the SL SSB period to the first S-SSB, slot interval (sl-TimeInterval) between two neighboring S-SSBs if there are more than one S-SSBs within one S-SSB period, and number of S-SSB transmissions (Sl-NumSSB-WithinPeriod) within one S-SSB period.

A terminal device (i.e., UE) may select its SyncRef based on different priorities of the sources as summarized in the **Error! Reference source not found.**below (where P0 to P6 correspond to highest to lowest priority levels, respectively) depending whether it is a GNSS-based synchronization (GNSS as the highest priority) or access node (eNB/gNB) -based synchronization (an access node has the highest priority).

| Priority Group | GNSS-based synchronization | Access node -based synchronization |
|---|---|---|
| P0 | GNSS | Access node (gNB/eNB) |
| P1 | UE directly synchronized to GNSS (SyncRef UE in network coverage and directly synchronized to GNSS, i.e., with inCoverage =1 and SLSS ID={0}) | UE directly synchronized to gNB/eNB (SyncRef UE directly synchronized to gNB/eNB, i.e., with inCoverage =1 and with SLSS ID={1,...,335}) |
| P2 | UE indirectly synchronized to GNSS (SyncRef UE out of GNSS/network coverage and one hop away from GNSS, i.e., with inCoverage =0 and SLSS ID={0}) | UE indirectly synchronized to gNB/eNB (SyncRef UE out of GNSS/network coverage and one hop away from a gNB/eNB, i.e., with inCoverage =0 and with SLSS ID={1,...,335}) |
| P3 | gNB/eNB | GNSS |
| P4 | UE directly synchronized to gNB/eNB (SyncRef UE directly synchronized to a gNB/eNB, i.e., with inCoverage =1 and with SLSS ID={1,...,335}) | UE directly synchronized to GNSS (SyncRef UE directly synchronized to GNSS, i.e., with inCoverage =1 and SLSS ID={0}) |
| P5 | UE indirectly synchronized to gNB/eNB (SyncRef UE out of GNSS/network coverage and one hop away from a gNB/eNB, i.e., with inCoverage =0 and with SLSS ID={1,...,335}) | UE indirectly synchronized to GNSS (SyncRef UE out of GNSS/network coverage and one hop away from GNSS, i.e., with inCoverage =0 and SLSS ID={0}) |
| P6 | The remaining UEs have the lowest priority (SyncRef UE out of GNSS/network coverage and two or more hops away from a gNB/eNB or GNSS, i.e., with inCoverage =0 and with SLSS ID={336,337,..., 671}; UE's own internal clock) | |

As captured in the above Table, a terminal device (i.e., UE) may select an access node (i.e., a gNB/eNB) or GNSS with highest priority (Priority level 0). When a terminal device selects GNSS as the SyncRef source, the DFN, the subframe number within a frame and slot number within a frame used for NR SL communication are derived from the current coordinated universal time (UTC) provided by the GNSS. Whereas, the subframe frame number (SFN) which provides an indexing of the frames based on the cell timing reference can be used to derive the DFN if UE selects gNB/eNB as the SyncRef source.

When there is no access node (gNB/eNB) or GNSS available as SyncRef source, a terminal device may perform a full search (i.e., a search covering all subframes and all possible SLSS IDs) to detect candidate SLSS to look for SyncRef UEs. It should be noted that, by detecting the SLSS sent by a SyncRef terminal device, the terminal device is able to synchronize to the SyncRef terminal device and estimate the beginning of the frame and carrier frequency. Upon successful SLSS detection, the terminal device may proceed with decoding the PSBCH. If the terminal device has not selected a SyncRef UE as the source and multiple candidate SyncRef terminal devices (or SLSS IDs) are detected for which the physical sidelink broadcast channel reference signal received power (PSBCH-RSRP) exceeds the minimum requirement by *sl-SyncRefMinHyst* and the corresponding MIB-SL is successfully received, the terminal device may choose the SyncRef terminal device with the highest PSBCH-RSRP as the source considering the priority levels given in the above **Error! Reference source not found..** If the terminal device already has selected a SyncRef terminal device as the source, the terminal device may still perform reselection of SyncRef UE if:

-    PSBCH-RSRP of the strongest candidate SyncRef terminal device exceeds the minimum requirement by sl-*SyncRefMinHyst* and the strongest candidate SyncRef terminal device belongs to the same priority group as the current SyncRef terminal device and the PSBCH-RSRP of the strongest candidate SyncRef terminal device exceeds the PSBCH-RSRP of the current SyncRef terminal device by *syncRefDiffHyst*; or
-    PSBCH-RSRP of the candidate SyncRef terminal device exceeds the minimum requirement by *sl-SyncRefMinHyst* and the candidate SyncRef terminal device belongs to a higher priority group than the current SyncRef terminal device; or
-    PSBCH-RSRP of the current SyncRef terminal device is less than the minimum requirement

When a terminal device selects SyncRef terminal device as the source, it may make use of SL sync information carried in S-SSB transmitted by the SyncRef terminal device for synchronization.

One or both of the terminal devices 100, 102 of Figure 1 may be configured to operate as a relay towards another (remote) terminal device (e.g., other one of terminal devices 100, 102) for communicating system information blocks (SIBs) which are available to it. The remote terminal device may also be configured to request which SIBs to receive from the relay terminal device. Specifically, SIB9 may be employed here.

The SIB9 comprises information on Global Positioning System (GPS) time and Coordinated Universal Time (UTC). The terminal device may use the parameters provided in this system information block to obtain the UTC, the GPS and the local time. Accurate 5GS time synchronization is enabled by a framework with two aspects:

- Identifying specific events at the air interface, timestamping these events at the access node and then the terminal device identifying these events and receiving the timemstamp relative to these events from the access node to acquire a time of day (ToD).
- Mechanisms for the propagation delay compensation (PDC) between a terminal device and an access node (over the Uu interface).

Most notably in view of the embodiments to be discussed below, the SIB9 comprises reference time information ("ReferenceTimeInfo", RTI). The RTI may comprise the following four fields:

**referenceSFN:** This field indicates the reference SFN corresponding to the reference time information. If referenceTimeInfo field is received in DLInformationTransfer message, this field indicates the SFN of PCell.

**time:** This field indicates time reference with 10ns granularity. The indicated time is referenced at the network, i.e., without compensating for RF propagation delay. The indicated time in 10 ns unit from the origin is refDays*86400*1000*100000 + refSeconds*1000*100000 + refMilliSeconds*100000 + refTenNanoSeconds. The refDays field specifies the sequential number of days (with day count starting at 0) from the origin of the time field. If the referenceTimeInfo field is received in DLInformationTransfer message, the time field indicates the time at the ending boundary of the system frame indicated by referenceSFN. The UE considers this frame (indicated by referenceSFN) to be the frame which is nearest to the frame where the message is received (which can be either in the past or in the future). If the referenceTimeInfo field is received in SIB9, the time field indicates the time at the SFN boundary at or immediately after the ending boundary of the SI-window in which SIB9 is transmitted. If referenceTimeInfo field is received in SIB9, this field is excluded when determining changes in system information, i.e., changes of time should neither result in system information change notifications nor in a modification of valueTag in SIB1.

**timeInfoType:** If timeInfoType is not included, the time indicates the GPS time and the origin of the time field is 00:00:00 on Gregorian calendar date 6 January, 1980 (start of GPS time). If timeInfoType is set to localClock, the origin of the time is unspecified.

**uncertainty:** This field indicates the uncertainty of the reference time information provided by the time field. The uncertainty is 25 ns multiplied by this field. If this field is absent, the uncertainty is unspecified.

It should be noted the "uncertainty" field in the RTI may only be considered to include the inaccuracy from the timing source and thus errors occurring within the architecture of the access node. In other words, the "uncertainty" field does include inaccuracy introduced by the air interface. This information is important for many different purposes such as selecting the most accurate clock or determining order of event post-processing (e.g. blockchain or fault backtracing).

Knowing the correct uncertainty of the reference time information (or "ReferenceTimeInfo") (RTI) is important for a terminal device for many reasons. Knowing the reference time and its uncertainty enables selecting the most accurate time-of-day (ToD) source (without having to collect lengthy statistics) if more than one ToD source is available. Further, said uncertainty information may be used for a best master clock (BMC) algorithm. This selection can be on higher layers, but can also be done on lower layers for, e.g., relay terminal device or SyncRef terminal device selection. Moreover, knowing the uncertainty of the reference time information is important for post processing purposes, e.g., for correlating ToD timestamped events in the cloud (e.g., for fault chain analysis (cause/effect) or system optimizations).

However, when the reference timing information is forwarded in sidelink by means of relaying, an additional uncertainty (additional over the network side uncertainties defined in the RTI itself) may be introduced due to the air interface inaccuracies. Such additional uncertainty may be caused, for example, by the transmission timing error (i.e., $T_e$ values as discussed above). The transmission timing error affects how accurate the air interface event is in time, i.e., the timing error of the frame boundary. Further inaccuracy in the air interface may result, for example, from the propagation delay (if propagation delay compensation is not applied) or the error of propagation delay compensation itself (if propagation delay compensation is applied).

The problem may exist on the Uu interface (being an interface connecting terminal devices to UTRAN) and may be even further aggravated (or worsened) when a PC5 interface (being an interface connecting terminal devices to each other) is involved. The reason for this is that a remote terminal device receiving a forwarded RTI is not aware of how much uncertainty is introduced by the source terminal device providing the timing. The uncertainty introduced for RTI before it reaches the remote terminal device may depend on the conditions and capabilities of the terminal device which is providing accurate time information. Said conditions and capabilities may comprise, for example, the following:

- the type of the synchronization source used by the terminal device,
- the capability of the terminal device to track the frame timing accurately,
- propagation delay errors (which may or may not be compensated using different methods/configurations) and
- the number of hops there are between the terminal device and an access node providing a 5G system (5GS) clock.

The embodiments to be discussed below in detail seek to overcome or at least alleviate at least some of the problems described above. Namely, the embodiments provide a solution in which a terminal device, once it determines that it is a timing source terminal device, estimates how much uncertainty it causes for the reference time information (RTI) forwarded in sidelink. The terminal device then informs one or more target terminal devices (equally called second terminal devices), e.g., by complementing the timing uncertainty in the forwarded RTI.

Figure 2 illustrates a process according to embodiments. The illustrated process may be carried out by a terminal device such as one of terminal devices 100, 102 of Figure 1 or a particular unit or part (e.g., a computing device) comprised in said terminal device. In the following, the entity carrying out the illustrated process is called simply an apparatus without loss of generality. The apparatus may be a (first) terminal device or a part thereof. Further, the terminal device which the apparatus may be or in which the apparatus may be comprised is called, in the following, a first terminal device without loss of generality. It should be noted the first terminal device may be equally called a source terminal device (to emphasize its role in relation to one or more target terminal device to be discussed below).

Referring to Figure 2, the apparatus initially establishes, in block 201, a first terminal device (which may correspond to the apparatus or in which the apparatus may be comprised) as a timing source terminal device. The timing source terminal device may be suitable for sharing a time reference using sidelink communication. The establishing in block 201 may be carried out, for example, based on a received request for providing timing information (for sidelink communication) from at least one (target) terminal device, as will be discussed in more detail in relation to further embodiments. Said request may be, e.g., a request for SIB9 forwarding (or, in general, RTI forwarding). The first terminal device may be configured to be or act as a relay terminal device for said at least one (target) terminal device.

In some embodiments, the establishing operation in block 201 may comprise modifying the operation of the first terminal device for improving time accuracy. The modifying of the operation may comprise performing, by the apparatus, at least one of:

increasing at least one sampling rate (or bandwidth) for tracking downlink reference signals,
averaging or filtering downlink time of arrival (ToA) values based on a plurality of downlink frames, and
implementing a lower radio frequency error margin (i.e., lowering the radio frequency error margin).

The apparatus estimates, in block 202, a first time uncertainty caused by the first terminal device (e.g., by the air interface) for sidelink communication (i.e., for RTI forwarding via sidelink). The first time uncertainty may take into account, for example, time uncertainty related to frame timing determined based on a transmission timing error ($T_e$) in a sidelink interface, time uncertainty resulting from using propagation delay compensation (PDC) between the first terminal device and an access node (which communicates RTI to the first terminal device), time uncertainty due to propagation delay determined based, e.g., on timing advance (if PDC is not used), time uncertainty resulting from clock skew and/or time uncertainty resulting from group delay calibration error.

In embodiments where the establishing operation in block 201 comprises modifying operation of the first terminal device for improving time accuracy, the first time uncertainty may be estimated taking into account this modification.

The apparatus causes, in block 203, transmitting information on the first time uncertainty and/or a combined time uncertainty to one or more target terminal devices. Here, the combined time uncertainty corresponds to a combination (e.g., a sum) of the first time uncertainty and a second time uncertainty corresponding to a time uncertainty of reference time defined in the RTI.

In some embodiments where at least the combined time uncertainty is transmitted in block 203, the second time uncertainty may correspond to the "uncertainty" field of the RTI discussed above. Thus, the apparatus may supplement or modify the value of the uncertainty field by adding the first time uncertainty and cause transmission of a message (e.g., a SIB9 message) comprising the RTI with the modified "uncertainty" field to the one or more target terminal devices in block 203. The (unmodified) RTI may have been received from an access node (e.g., between blocks 201 & 202). The (unmodified) RTI may have been received, for example, as a SIB9 message. The RTI transmitted by the first terminal device may correspond to said received RTI apart from the modification of the uncertainty field.

In some embodiments where the first time uncertainty is transmitted, the apparatus may cause transmission of information on the second time uncertainty to the one or more target terminal devices as a separate message (e.g., as a SIB9 message or other message comprising the RTI).

In some embodiments where at least the first time uncertainty is transmitted, the first time uncertainty may be transmitted, in block 203, as a separate field of a particular message to be forwarded to the one or more target terminal devices, as a part of sidelink control information (SCI) or mapped to a sidelink synchronization signal identifier (SLSS ID). According to the last mentioned alternative, a mapping between (possible) values of the first time uncertainty and the SLSS ID (e.g. SLSS ID={1,...,335}, as discussed above) may exist (and be stored in a memory of the apparatus) and the apparatus may indicate the level of the first time uncertainty to the one or more target terminal device by communicating the SLSS ID priority group to the one or more target terminal device in block 203. An association or mapping between a given SLSS ID range and a priority group may be pre-defined. In response to determining or detecting a low value for the first time uncertainty (i.e., a value equal to or below a pre-defined threshold for the first time uncertainty), the apparatus may include a low SLSS ID in a message transmitted to the one or more target terminal devices. In response to determining or detecting a high uncertainty (i.e., a value above the pre-defined threshold for the first time uncertainty), the apparatus may include a high SLSS ID in a message transmitted to the one or more target terminal devices. Here, the low SLSS ID may correspond to a SLSS ID value from 1 to $n$, and the high SLSS ID may correspond to a value from $n+1$ to 335, where $n$ is an integer from 1 to 334. This way the apparatus (or the equally the first terminal device) may aid the target terminal(s) in the selection of the synchronization and timing source (e.g., the target terminal will be able to see which source has a lower time uncertainty and selects it). This alternative may be employed, e.g., in a case where the selection of a SyncRef terminal device (by a target terminal device) is assumed to be influenced by the time uncertainty. In some alternative embodiments, an opposite mapping between the first time uncertainty and the SLSS ID may be done, that is, a low value for the first time uncertainty may be mapped to a high SLSS ID while a high value for the first time uncertainty may be mapped to a low SLSS ID.

The one or more target terminal devices in block 203 may comprise one or more remote terminal devices, one or more out of coverage terminal devices and/or one or more (other) terminal devices which forward timing information in multiple hops to reach a remote terminal device.

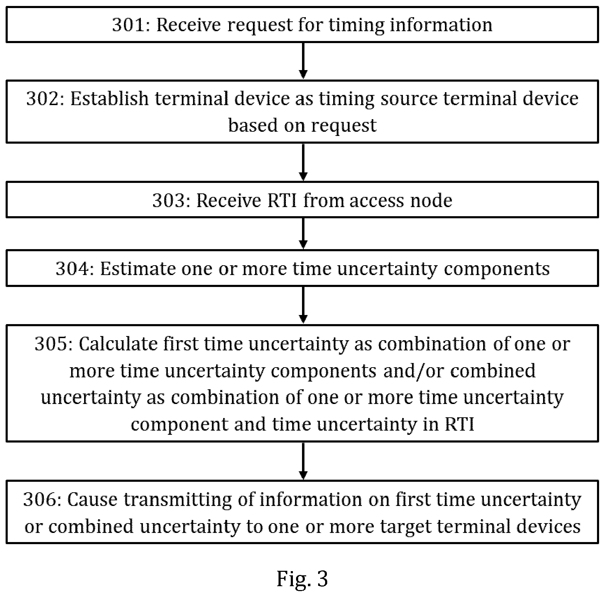

Figure 3 illustrates another process according to embodiments. The illustrated process may be carried out by a terminal device such as one of terminal devices 100, 102 of Figure 1 or a particular unit or part (e.g., a computing device) comprised in said terminal device. In the following, the entity carrying out the illustrated process is called simply an apparatus without loss of generality. The apparatus may be a (first) terminal device or a part thereof. Further, the terminal device which the terminal device may be or in which the apparatus may be comprised is called a first terminal device without loss of generality. The process of Figure 3 may be considered a more detailed implementation of Figure 2. Thus, any of the definitions provided in connection with Figure 2 may apply, *mutatis mutandis,* for the process of Figure 3.

Referring to Figure 3, the apparatus receives, in block 301, a request for providing timing information (for sidelink communication) from a (target) terminal device. The request may be, e.g., a request for SIB9 forwarding. In some alternative embodiments, said request may be received from an access node.

In response to receiving the request in block 301, the apparatus establishes, in block 302, a first terminal device (in which the apparatus may be comprised) as a timing source terminal device (for sidelink communication). Actions carried out in block 302 may correspond to actions discussed above in connection with block 201 of Figure 2.

The apparatus receives, in block 303, from an access node, a message comprising reference time information (RTI) defining at least the reference time and a time uncertainty of the reference time (equally called here a second time uncertainty). Said message may be SIB9 message.

The apparatus estimates, in block 304, one or more time uncertainty components caused by the first terminal device for sidelink communication. In other words, the apparatus estimates (e.g., calculates), in block 303, one or more time uncertainties associated with different sources of uncertainty relating to the first terminal device and thus contributing to the total time uncertainty caused by the first terminal device. In some embodiments, two or more time uncertainty components may be estimated in block 304.

The estimating of the one or more time uncertainty components in block 304 may comprise at least one of:

1) estimating a time uncertainty related to frame timing based on a transmission timing error ($T_e$) in a sidelink interface,
2) if propagation delay compensation (PDC) is used by the first terminal device for compensating for the propagation delay between the first terminal device and the access node, estimating time uncertainty resulting from using propagation delay compensation,
3) if PDC is not used by the first terminal device for compensating for the propagation delay between the first terminal device and the access node, estimating time uncertainty due to propagation delay between the first terminal device and the access node,
4) estimating time uncertainty due to propagation delay between the first terminal device and a target terminal device in a multi-hop scenario,
5) estimating time uncertainty resulting from clock skew, and
6) estimating time uncertainty resulting from group delay calibration error.

Regarding alternative 1), the transmission timing error $T_e$ may be defined as described above. The value of the transmission timing error $T_e$ may depend, e.g., on a configuration of the first terminal device and possibly also on the subcarrier spacing configuration. The synchronization source of the first terminal device may be, e.g., one of GNSS, NR cell, E-URTAN cell and SyncRef terminal device, as described above. The value of the transmission timing error $T_e$ for a given synchronization source (and possibly for a given SCS) may be defined according to the four Tables provided above for the values of the transmission timing error $T_e$ when the synchronization source is a GNSS, an NR cell, an E-URTAN cell and SyncRef terminal device, respectively.

Further regarding alternative 1), in case the first terminal device uses an NR/LTE cell as a synchronization source, if the first terminal device uses higher bandwidth reference signal other than only SSB to track the frame timing (if available), the apparatus may take into account the improved time tracking in alternative 1) by deducting it from the default $T_e$ resulting in a time uncertainty component of a lower value. To give an example, for $T_e=12*64*T_c$ in 15 kHz SCS, the minimum sampling interval for 3.6 MHz SSB corresponds to $4.26*64*T_c$ in $T_e$. However, if the first terminal device (or the apparatus therein) tracks the downlink reference signal with 40 MHz bandwidth, the downlink detection error component reduces to $0.4*64*T_c$. Thus, the first terminal device may achieve timing accuracy of approximately $12*64*T_c$ - $4.26*64*T_c$ + $0.38*64*T_c$ = $8.12*64*T_c$, i.e., the additional uncertainty translates to a lower value compared to the default $T_e$ of $12*64*T_c$.

Regarding alternative 2) where PDC is enabled, the apparatus may apply PDC specifically on top of forwarded SIB9 timing. The apparatus may estimate the error introduced in PDC, for example, using RAN1 equations derived for evaluating the error of the PDC method.

Assuming that the PDC is based on TA, the estimation of the error introduced in PDC ("error$_{total, TA}$") may be carried out using the following equation:

$$\text{error}_{\text{total,TA}} = \text{error}_{\text{BS,DL,Tx}} + \text{error}_{\text{UE,DL,Rx}} + 0.5 * (\text{error}_{\text{BS,DL,Tx}} + \text{error}_{\text{UE,DL,Rx}} + \text{error}_{\text{UE,UL,Tx}} + \text{error}_{\text{BS,UL,Rx}} + \text{error}_{\text{TAind}}),$$

where "error$_{UE, DL, Rx}$" is a reception (Rx) timing error of the terminal device, "error$_{UE, UL, Tx}$" is a transmission (Tx) timing error of the terminal device, "error$_{BS, DL, Tx}$" is a transmission timing error of the access node, "error$_{BS, UL, Rx}$" is a reception timing error of the access node and "error$_{TAind}$" is a TA indication granularity error. In some embodiments, the sum provided in parenthesis in the above equation may comprise a further term to be summed: error$_{BS,DL,Tx}$ which is a transmission timing error of the access node (i.e. a base station, BS).

Assuming that the PDC is based on round-trip time (RTT), the estimation of the error introduced in PDC ("error$_{total, RTT}$") may be carried out using the following equation

$$\text{error}_{\text{total,RTT}} = \text{error}_{\text{BS,DL,Tx}} + \text{error}_{\text{UE,DL,Rx}} + 0.5 * (\text{error}_{\text{BS,Rx-Tx}} + \text{error}_{\text{UE,Rx-Tx}} + \text{error}_{\text{ind,Rx-Tx}}),$$

where "error$_{BS,DL,Tx}$" is a transmission timing error of the access node, "error$_{UE,DL,Rx}$" is a reception timing error of the terminal device, "error$_{BS, Rx-Tx}$" is a measurement inaccuracy of a reception-transmission time difference at the access node, "error$_{UE,Rx-Tx}$" is a measurement inaccuracy of a reception-transmission time difference at the terminal device and "error$_{ind,Rx-Tx}$" is a reception-transmission indication granularity error.

Regarding alternative 3) where PDC is not used, the apparatus may estimate the time uncertainty associated with the propagation delay between the first terminal device and the access node (i.e., the access node providing the RTI) based on, e.g., timing advance. The timing advance indicates the length of time a signal takes to reach the access node from a terminal device. The timing advance may be provided to the first terminal device by the access node.

Regarding alternative 4), the time uncertainty given by propagation delay between terminal devices may be roughly estimated, for example, a) based on Zone ID and Zone Length (where the difference between Zone IDs can be translated to distance and further to propagation delay) or b) based on signal level, (i.e., if RSRP is low/high, there is low/high additional time uncertainty due to propagation delay, respectively). Notably, this time uncertainty component may be evaluated per target terminal device (i.e., this time uncertainty component may have a different value for different target terminal devices).

In some embodiments, the estimating of the one or more time uncertainty components in block 304 may comprise at least alternative 1).

The apparatus calculates, in block 305, the first time uncertainty as a combination (e.g., a sum or a weighted sum) of the one or more time uncertainty components. Additionally or alternatively, the apparatus calculates, in block 305, a combined time uncertainty as a combination (e.g., a sum) of the one or more time uncertainty components and the second time uncertainty (i.e., the time uncertainty defined in the RTI received from the access node in block 303).

In some embodiments, the apparatus may calculate, in block 305, a plurality of first time uncertainties as combinations (e.g., a sum or a weighted sum) of the one or more time uncertainty components of which at least one is defined to be target terminal device -specific (i.e., defined per target terminal device). This may be relevant especially if the alternative 4) described above is to be taken into account.

The apparatus causes, in block 306, transmitting information on the first time uncertainty and/or a combined time uncertainty (or one or more first time uncertainties and/or one or more combined time uncertainties) to one or more target terminal devices (comprising the terminal device from which the request was received in block 301). Actions carried out in block 306 may correspond to actions discussed above in connection with block 203 of Figure 2.

In some embodiments, the apparatus may cause, in block 306, transmitting information on one or more first time uncertainties and/or one or more combined time uncertainties, respectively, to one or more target terminal devices (comprising the terminal device from which the request was received in block 301).

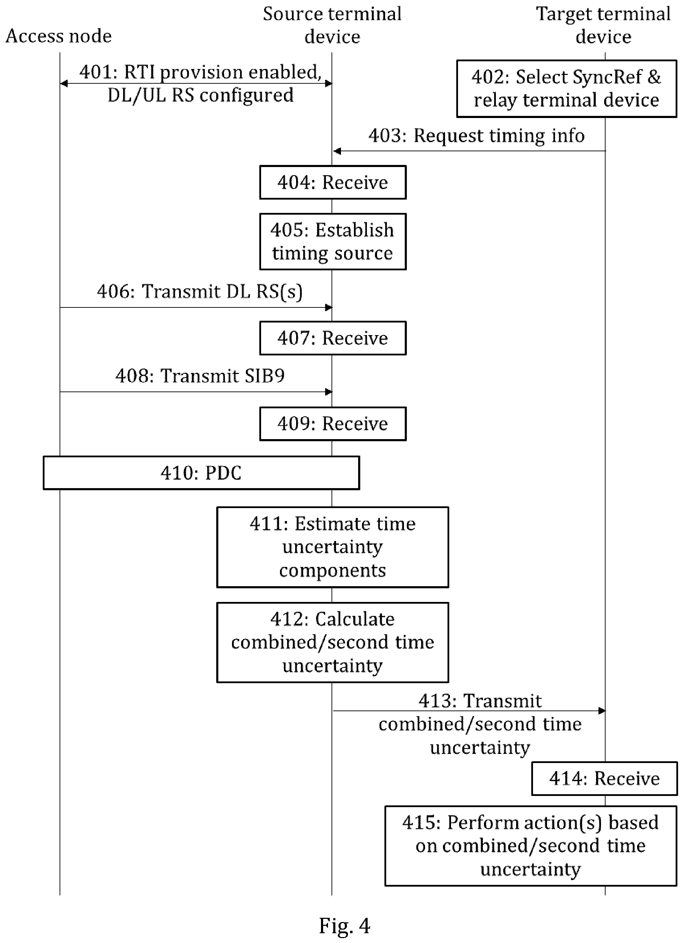

Figure 4 illustrates signaling between a first (or source) terminal device, an access node serving the first terminal device and a target terminal device according to embodiments. The illustrated process may be carried out by the two terminal devices 100, 102 of Figure 1 or a particular unit or part (e.g., a computing device) comprised in said terminal devices and an access node 104 of Figure 1 or a particular apparatus or part (e.g., a computing device) comprised in said access node.

Many of the processes illustrated in Figure 4 especially pertaining to the first terminal device were previously discussed already in connection with Figure 2 and/or 3. Any of the definitions provided in connection with Figure 2 and/or 3 may apply, *mutatis mutandis*, for the processes of Figure 4.

Initially, in messages 401, the RTI provisioning may be enabled in the access node and/or the downlink/uplink reference signals may be configured using the Uu interface.

The target terminal device selects, in block 402, a relay terminal device and optionally also a synchronization reference (SyncRef) terminal device for the target terminal device. The first terminal device is assumed here to be said relay terminal device and optionally also said SyncRef terminal device (alternatively, the used synchronization source may be, e.g., GNSS or the access node or another terminal device acting as a SyncRef terminal device).

The target terminal device transmits, in message 403, a request for providing timing information (for sidelink communication) to the first terminal device.

In response to the receiving of the request in block 404, the first terminal device (or the apparatus comprised therein) establishes, in block 405, itself as a timing source (for at least the target terminal device), similar to as discussed in connection with block 201 of Figure 2 or block 302 of Figure 3.

The access node transmits, in message(s) 406, one or more downlink reference signals to the first terminal device. Said one or more downlink reference signals may comprise, for example, one or more SSBs, one or more channel status information reference signals (CSI-RS) and/or one or more positioning reference signals (PRS). Said one or more reference signals are received by the first terminal device in block 407. Said one or more reference signals may be employed by the first terminal device, for example, for improving time tracking when performing the estimation according to alternative 1) discussed in connection with block 304 of Figure 3, as described above.

The access node transmits, in message(s) 408, one or more SIB9 messages to the first terminal device. As described above, the SIB9 message comprises reference time information defining at least reference time and time uncertainty of said reference time (called the second time uncertainty in previous embodiments). Said one or more reference signals are received by the first terminal device in block 409, similar to as discussed in connection with block 303 of Figure 3. In other embodiments, other type of message may be used for communicating the RTI.

The access node and the first terminal device carry out a propagation delay compensation (PDC) process in block 410. The purpose of the PDC process is to correct the error caused by the propagation delay on the timing information. The PDC process performed in block 410 may be based on RTT or TA (that is, on estimating RTT or TA and subsequently determining the propagation delay based on said RTT or TA). The PDC process may be performed (primarily) by either the access node or the first terminal device. To enable the first terminal device to execute the PDC process, the first terminal device may be configured, e.g., via dedicated RRC signaling or SIB. The RTT-based PDC process may comprise performing using Rx-Tx time difference measurements of a single pair of configured tracking reference signal (TRS)/PRS and sounding reference signal (SRS). In the case of the TA-based PDC process, the timing advance value is used for estimating the propagation delay (e.g., by TA/2). After the propagation delay is estimated, the estimated propagation delay is added to the timing information in order to compensate for the error.

In summary, the PDC process may be carried out according to one of the following options:
Terminal device -side TA-based PDC: The first terminal device estimates TA and determines the propagation delay based on the TA.

Access node-side TA-based PDC: The access node estimates TA and compensates RTI. Then, the access node sends the compensated RTI to the first terminal device.

Terminal device -side RTT-based PDC: The first terminal device and the access node estimate Rx-Tx time difference. The access node provides the results of its measurement(s) to the first terminal device and the first terminal device uses said results to determine the propagation delay.

Access node -side RTT-based PDC: The first terminal device and the access node estimate Rx-Tx time difference, the first terminal device provides the results of its measurement(s) to the access node. The access node compensates RTI with the estimated propagation delay and sends the compensated RTI to the first terminal device.

Actions relating to elements 411 to 413 may correspond fully to actions described above in connection with blocks 304 to 306 of Figure 3. Thus, in short, the first terminal device estimates, in block 411, one or more time uncertainty components caused by the first terminal device for sidelink communication and calculates, in block 412, the first time uncertainty as a combination (e.g., a sum) of the one or more time uncertainty components and/or a combined time uncertainty as a combination (e.g., a sum) of the one or more time uncertainty components and the second time uncertainty (being the time uncertainty defined in the RTI received from the access node in block 409). Then, the first terminal device transmits, in message 413, the combined time uncertainty (i.e., a combination of the first time uncertainty derived by the first terminal device and the second time uncertainty defined in the RTI) and/or the first time uncertainty to the target terminal device (and optionally also to one or more further target terminal devices). In some embodiments, the second time uncertainty may also be transmitted in message 413.

In response to receiving the first (and second) time uncertainty and/or the combined time uncertainty in block 414, the target terminal device carries out, in block 415, one or more actions based on the received information. Said one or more actions may comprise, for example, evaluating quality of timing provided by the first terminal device as a timing source based on the information on the first time uncertainty or the combined time uncertainty. The evaluated quality of timing may be stored in a memory. Thereafter, the target terminal device may run, also in block 415, a best master clock (BMC) algorithm for selecting a grand master clock using at least the quality of the timing for the first terminal device as input. If deemed necessary based on the BMC algorithm, the target terminal device may reselect the timing source to use. Said new timing source may need to satisfy certain pre-defined selection criteria (e.g., a threshold for RSRP value). For example, the target terminal device may reselect the first terminal device to be the SyncRef terminal device for the target terminal device (assuming no such selection was done in block 402).

In some alternative embodiments, the first terminal device (or an apparatus therein) may modify the uncertainty field of the RTI (and subsequently transmit the modified RTI in message 413) in response to detecting that the first terminal device is a SyncRef terminal device for the target terminal device. This detection may be based on an indication transmitted by the target terminal device to the first terminal device (not shown in Figure 4) or on the transmission timing of the target terminal device (i.e., the detection occurs if the transmission timing of the target terminal device is within certain pre-defined limits compared to a frame timing of the first terminal device).

In general, the first terminal device may determine whether the first terminal device is a SyncRef terminal device for a plurality of target terminal devices based on indications received from the plurality of target terminal devices or transmission timings of the plurality of target terminal devices and subsequently cause the transmission of information on the combined time uncertainty (e.g., comprised in a modified uncertainty field of the RTI) to any target terminal devices for which the first terminal device is the SyncRef terminal device.

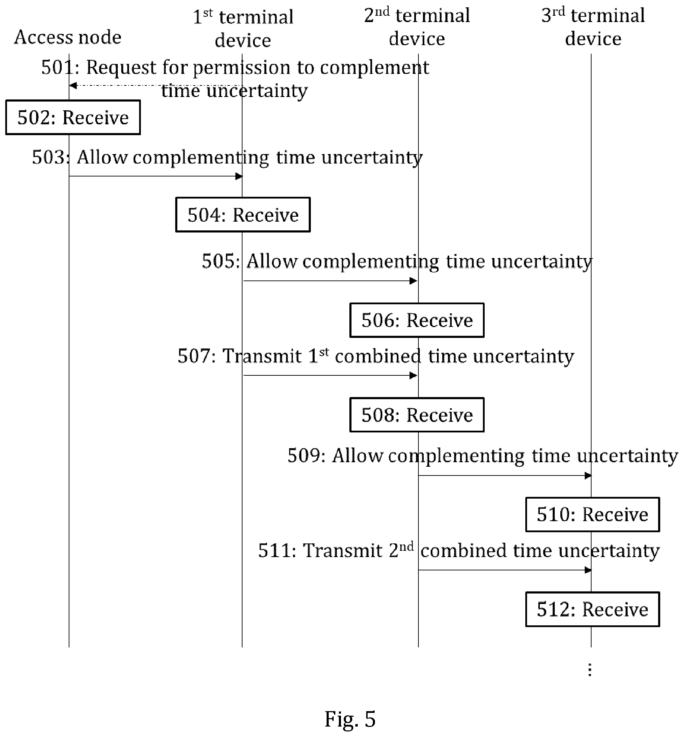

Figure 5 illustrates signaling between a first (or source) terminal device, an access node serving the first terminal device, a second terminal device and a third terminal device according to embodiments. Here, the first terminal device is assumed to be communicatively connected via sidelink at least to the second terminal, the second terminal device is assumed to be communicatively connected via sidelink at least to the first terminal device and the third terminal device and the third terminal device is assumed to be communicatively connected via sidelink to the second terminal device and optionally one or more further terminal devices. The illustrated process may be carried out by the two terminal devices 100, 102 of Figure 1 and further terminal device (not shown in Figure 1) or a particular apparatus or part (e.g., a computing device) comprised in said terminal devices and an access node 104 of Figure 1 or a particular apparatus or part (e.g., a computing device) comprised in said access node.

Figure 5 illustrates, in particular, a multi-hop-based embodiment, that is, an example of a multi-hop scenario where multiple terminal devices are arranged between the RTI originator (e.g., an access node as in Figure 5) and the target terminal device (here, the third terminal device).

Referring to Figure 5, it may be initially assumed that the first, second and third terminal devices have calculated or estimated time uncertainties associated with sidelink communication using said first, second and third terminal devices. These time uncertainties may have been determined as discussed in any of the above embodiments for calculating the first time uncertainty.

The first terminal device may initially request, in message 501, for permission to supplement the time uncertainty given in the RTI with its own time uncertainty value (i.e., the first time uncertainty as defined in previous embodiments). In some embodiments, the message 501 may comprise the first time uncertainty which is to be added to the (second) uncertainty defined in the RTI. The request is received by the access node in block 502. Elements 501, 502 may be considered optional.

The access node transmits, in message 503, a permission (equally called allowance configuration) to supplement the time uncertainty defined in the RTI with the first time uncertainty estimated by the first terminal device (possibly defined in message 501) to the first terminal device. The permission 503 may be transmitted, for example, as a broadcast signal or as a part of a field of the RTI. The permission is received by the first terminal device in block 504. In other cases, the access node may transmit, instead, a rejection of the request to supplement the time uncertainty which then terminates the process.

Then, the first terminal device transmits, in message 505, a corresponding permission to the second terminal device (i.e., to the next terminal device in a multi-hop chain). The permission 505 may be transmitted, for example, as a broadcast signal or as a part of a field of the RTI. The permission is received by the second terminal device in block 506.

Following the transmission of the permission 505, the first terminal device transmits, in message 507, a message (e.g., a SIB9 message) comprising RTI with a supplemented or modified uncertainty field (i.e., uncertainty field modified by adding the time uncertainty caused by the first terminal device to the network-defined initial value similar to as discussed in previous embodiments). The message 507 is received by the second terminal device in block 508.

The process discussed in connection with elements 505 to 508 for the first and second terminal devices is then repeated in blocks 509 to 512 for the second and third terminal devices. Namely, the second terminal device transmits, in message 509, a permission to supplement the uncertainty field of the RTI to the third terminal device (i.e., to the next terminal device in a multi-hop chain). The permission 509 may be transmitted, for example, as a broadcast signal or as a part of a field of the RTI. The permission is received by the third terminal device in block 510. Following the transmission of the permission 509, the second terminal device transmits, in message 511, a message (e.g., a SIB9 message) comprising RTI with a further supplemented or modified uncertainty field (i.e., uncertainty field modified by adding the time uncertainty caused by the second terminal device to a sum of the network-defined initial value and the time uncertainty value associated with the first terminal device). The message 511 is received by the third terminal device in block 512.

In some embodiments, each terminal device, upon complementing the uncertainty with its own time uncertainty value, sets and transmits a flag to inform that the uncertainty field of the RTI has been complemented or modified so that the terminal devices further down in the multi-hop chain are aware that additional time uncertainties in sidelink have been taken into account. In other words, any of messages 507, 511 may comprise not only the RTI but also said flag indicating that the uncertainty given in the RTI has been modified.

In some alternative embodiments, no separate permission for supplementing the uncertainty given in the RTI is required. In such a case, each terminal device in the multi-hop chain may complement or modify the uncertainty field of the RTI (initially having a value defined by an access node such as a 5GS clock timing based value) with its additional uncertainty contribution similar to as described in connection with Figure 5 (though without the permission messages 501, 505, 509). The flag as described in the previous paragraph may optionally be transmitted also in this case.

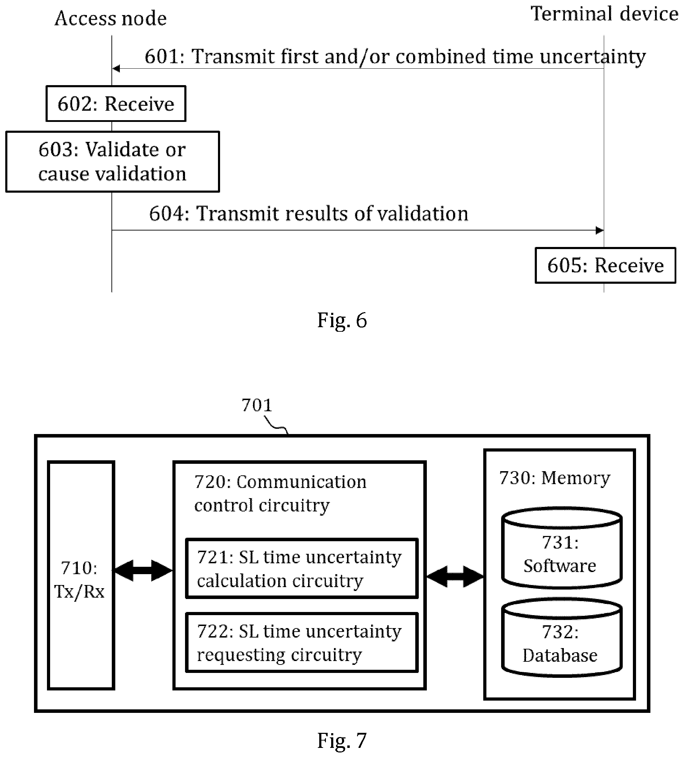

Figure 6 illustrates signaling between terminal device and an access node serving the terminal device according to embodiments. Here, the terminal device may be a source or first terminal device or a target terminal device or any terminal device in a multi-hop chain, as described above. The terminal device may be one of the two terminal devices 100, 102 of Figure 1 and the access node may be an access node 104 of Figure 1. The process of Figure 6 describes an additional functionality which may be combined with any of the embodiments discussed above.

Referring to Figure 6, it is assumed initially that the terminal device has either estimated a first time uncertainty (i.e., a time uncertainty for sidelink communication resulting from the terminal device itself) and/or a combined time uncertainty (i.e., a combination of the first time uncertainty and the network-defined second time uncertainty for sidelink communication) or has received the first and/or combined time uncertainty from another terminal device. These functionalities may have been carried out according to any of the embodiments discussed above.

The terminal device transmits, in message 601, a request for validating the combined time uncertainty or the first time uncertainty to the network (i.e., to an access node). Here, the request may comprise the combined time uncertainty and/or the first time uncertainty.

Subsequently, the access node receives, in block 602, the request and then validates or causes validating, in block 603, the combined time uncertainty or the first time uncertainty. In other words, the access node either validates the combined or first time uncertainty itself or forwards the request to a (core) network element which carries out the validation and subsequently sends the results of the validation back to the access node. The validation may comprise recalculating the combined or first time uncertainty value and comparing the recalculated value to the corresponding value received from the terminal device. If the two values for the combined or first time uncertainty match (or are at least within pre-defined limits of each other), the combined or first time uncertainty is deemed valid (i.e., the result of the validation is positive). Otherwise, the combined or first time uncertainty is deemed invalid (i.e., the result of the validation is negative). Here, it may be assumed that the network is able to check how well uplink timing of the terminal device is aligned (within the transmission timing error $T_e$ in Uu interface), that transmission timing accuracy in Uu interface is also reflected in the PC5 interface and that network is able to determine propagation delay error, e.g. based on TA or RTT configuration.

The access node transmits, in message 604, at least result of the validation to the terminal device. The terminal device receives, in block 605, at least said result. Optionally, message 604 may comprise also the value of the first or combined time uncertainty calculated by the network.

If the result of the validation is negative (i.e., the first or combined time uncertainty calculated by the terminal device is deemed, by the access node, to be invalid), the terminal device may, for example, attempt to recalculate the first and/or combined time uncertainty itself, terminate an on-going process for sharing the first and/or combined time uncertainty to one or more target terminal device or forward the network-calculated value of the first and/or combined time uncertainty to one or more target terminal device (instead of a value calculated by the terminal device itself),

If the result of the validation is positive (i.e., the first or combined time uncertainty calculated by the terminal device is deemed, by the access node, to be valid) (and assuming that the terminal device is a first or source terminal device), the terminal device may transmit information on the first time uncertainty or the combined time uncertainty to one or more target terminal devices in response to receiving the message 604 validating the first time uncertainty or the combined time uncertainty from the access node. In other words, the actions pertaining to block 203 of Figure 2 or block 306 of Figure 3 may be carried out, in some embodiments, only in response to being informed of successful validation of the first and/or combined time uncertainty.

The embodiments discussed above enable a target terminal device which is configured to receive RTI over sidelink to have more complete and thus more useful information regarding the uncertainty of timing. Without the solution, the time uncertainty information provided in a forwarded RTI is little or no use as it will only comprise the time uncertainty from the network. In other words, the additional time uncertainties from the air interface (which can be expected to be the major uncertainty components in many scenarios) of the terminal devices providing/forwarding the timing would not be reflected in the uncertainty received by the target terminal device.

Figure 7 illustrates an exemplary apparatus 701 configured to carry out at least some of the functions described above in connection with Figure 1 to 6. The apparatus 701 may be an electronic device comprising electronic circuitries. The apparatus 701 may be a terminal device (e.g., a terminal device 100 or 102 of Figure 1) or a part thereof, e.g. an integrated circuit chip. The apparatus may be configured or configurable to act as a source (or first) terminal device and/or a target terminal device.

The apparatus 701 may comprise a communication control circuitry 720 such as at least one processor, and at least one memory 730 storing instructions, e.g., a computer program code (software) 731 that, when executed by the at least one processor, cause the apparatus to carry out any one of the embodiments of the apparatus described above. Said at least one memory 730 may also comprise at least one database 732.

The memory 730 may be implemented using any suitable data storage technology, such as semiconductor based memory devices, flash memory, magnetic memory devices and systems, optical memory devices and systems, fixed memory and removable memory. The memory may comprise a learning index, as described in previous embodiments.

The apparatus 701 may further comprise one or more communication interfaces (Tx/Rx) 710 comprising hardware and/or software for realizing communication connectivity according to one or more communication protocols. The one or more communication interfaces 710 may provide the apparatus 701 with communication capabilities to communicate in the cellular communication system and enable communication with network nodes and terminal devices, for example. The one or more communication interfaces 710 may comprise components such as an amplifier, filter, frequency-converter, (de)modulator, and encoder/decoder circuitries and one or more antennas.

Referring to Figure 7, the communication control circuitry 720 may comprise sidelink time uncertainty calculation circuitry 721 configured to carry out at least calculation of (first) time uncertainty caused by the terminal device for sidelink communication. The sidelink time uncertainty calculation circuitry 721 may be configured to carry out at least some of the processes of the first or source terminal device discussed in connection with any of Figures 2 to 6. Additionally or alternatively, the communication control circuitry 720 may comprise sidelink time uncertainty requesting circuitry 722 configured to carry out at least requesting and reception of (first) time uncertainty caused by the terminal device for sidelink communication or combined time uncertainty caused by the terminal device and the network in combination for sidelink communication. The sidelink time uncertainty requesting circuitry 722 may be configured to carry out at least some of the processes of the target terminal device discussed in connection with any of Figures 5 to 6.

In some alternative embodiments, the communication control circuitry 720 may comprise one of the sidelink time uncertainty calculation circuitry 721 and the sidelink time uncertainty requesting circuitry 722.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Figures 2 to 6 may be carried out by an apparatus comprising corresponding means for carrying out at least some of the described processes. Some example means for carrying out the processes may include at least one of the following: detector, processor (including dual-core and multiple-core processors), microprocessor, digital signal processor (DSP), controller, micro-controller, receiver, transmitter, encoder, decoder, memory, RAM, ROM, software, firmware, display, user interface, display circuitry, user interface circuitry, user interface software, display software, circuit, antenna, antenna circuitry, application-specific integrated circuit (ASIC), digital signal processing device (DSPD), programmable logic device (PLD) and field programmable gate array (FPGA). For firmware or software, the implementations according embodiments may be carried out through modules of at least one chipset (procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. In an embodiment, the at least one processor, the memory, and the computer program code form processing means or comprises one or more computer program code portions for carrying out one or more operations according to any one of the embodiments of Figures 2 to 6 or operations thereof.

Embodiments as described may also be carried out in the form of a computer process defined by a computer program or portions thereof. Embodiments of the methods described in connection with Figures 2 to 6 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly, and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

**Claims**

1. An apparatus comprising:

   at least one processor; and
   at least one memory storing instructions that, when executed by the at least one processor, cause the apparatus at least to:

      establish the apparatus as a timing source terminal device;
      estimate a first time uncertainty caused by the apparatus for sidelink communication; and
      cause transmission of information on at least one of the first time uncertainty and a combined time uncertainty to one or more target terminal devices, wherein the combined time uncertainty corresponds to a combination of the first time uncertainty and a second time uncertainty, the second time uncertainty corresponding to a time uncertainty of reference time defined in reference time information.

2. The apparatus of claim 1, wherein the at least one memory and the instructions are configured, with the at least one processor, to cause the apparatus to establish the apparatus as the timing source terminal device in response to receiving a request for providing timing information from at least one of the one or more target terminal devices or from an access node.

3. The apparatus according to any preceding claim, wherein the establishing of the apparatus as the timing source terminal device comprises:
modifying operation the apparatus for improving time accuracy in sidelink communication, wherein the first time uncertainty is estimated taking into account the modifying of the operation and the modifying of the operation comprises at least one of:

increasing at least one sampling rate for tracking downlink reference signals,
averaging or filtering downlink time of arrival values based on a plurality of downlink frames, or
lowering a radio frequency error margin.

4. The apparatus according to any preceding claim, wherein the at least one memory and the instructions are configured, with the at least one processor, to cause the apparatus to estimate the first time uncertainty by:

estimating one or more time uncertainty components caused by the apparatus for sidelink communication, wherein the estimating of the one or more time uncertainty components comprises at least one of:

estimating a time uncertainty related to frame timing based on a transmission timing error in a sidelink interface;
in response to propagation delay compensation being used by the apparatus, estimating time uncertainty resulting from using propagation delay compensation;
in response to propagation delay compensation not being used by the apparatus, estimating time uncertainty due to propagation delay based on timing advance;
estimating time uncertainty resulting from clock skew,
estimating time uncertainty resulting from group delay calibration error; or

calculating the first time uncertainty as a sum of the one or more time uncertainty components.

5. The apparatus according to any preceding claim, wherein the at least one memory and the instructions are configured, with the at least one processor, to cause the apparatus to cause the transmission of the combined time uncertainty by causing transmission of reference time information having an uncertainty field modified to correspond to the combined time uncertainty.

6. The apparatus according to any of claims 1 to 4, wherein the at least one memory and the instructions are configured, with the at least one processor, to cause the apparatus to cause the transmission of the first time uncertainty as at least one of:

a separate field of a transmitted message,
a part of transmitted sidelink control information, or
mapped to a transmitted sidelink synchronization signal identifier.

7. The apparatus according to any preceding claim, wherein the at least one memory and the instructions are configured, with the at least one processor, to cause the apparatus to:

receive a permission to further modify an uncertainty field of the reference time information from a terminal device; and/or
cause transmission of a permission to further modify an uncertainty field of the reference time information to the one or more target terminal devices; and
cause the transmission of the information on the combined time uncertainty, following the transmission of the permission, by causing transmitting the reference time information having the uncertainty field modified to correspond to the combined time uncertainty.

8. The apparatus according to any of claims 1 to 7, wherein the at least one memory and the instructions are configured, with the at least one processor, to cause the apparatus to:

cause transmission of a request for permission to modify an uncertainty field given in the reference time information to an access node; and
in response to receiving the permission from the access node, cause the transmission of the information on the combined time uncertainty by causing transmitting the reference time information having the uncertainty field modified to correspond to the combined time uncertainty; or

in response to receiving the permission from the access node, cause transmission of a permission to further modify the uncertainty field of the reference time information to the one or more target terminal devices and cause the transmission of the information on the combined time uncertainty, following the transmission of the permission, by causing transmitting the reference time information having the uncertainty field modified to correspond to the combined time uncertainty.

9. The apparatus according to claim 7 or 8, wherein the at least one memory and the instructions are configured, with the at least one processor, to cause the apparatus to:

cause transmitting, along with the reference time information comprising the combined time uncertainty, a flag indicating that the uncertainty field of the reference time information has been modified.

10. An apparatus comprising:

at least one processor; and
at least one memory including instructions that, when executed by the at least one processor, cause the apparatus at least to:

transmit a request for providing timing information to a terminal device identified as a relay terminal device for the apparatus; and
receiving information on a first time uncertainty estimated to be caused by the terminal device for sidelink communication or a combined time uncertainty from the terminal device, wherein the combined time uncertainty corresponds to a combination of the first time uncertainty and a second time uncertainty, the second time uncertainty corresponding to a time uncertainty of reference time defined in reference time information.

11. The apparatus of claim 10, wherein the terminal device is a synchronization reference terminal device for the apparatus.

12. A method comprising:

establish an apparatus as a timing source terminal device;
estimate a first time uncertainty caused by the apparatus for sidelink communication; and
cause transmission of information on at least one of the first time uncertainty and a combined time uncertainty to one or more target terminal devices, wherein the combined time uncertainty corresponds to a combination of the first time uncertainty and a second time uncertainty, the second time uncertainty corresponding to a time uncertainty of reference time defined in reference time information.

13. A computer program comprising instructions for causing an apparatus to perform at least the following:

establish the apparatus as a timing source terminal device;
estimate a first time uncertainty caused by the apparatus for sidelink communication; and
cause transmission of information on at least one of the first time uncertainty and a combined time uncertainty to one or more target terminal devices, wherein the combined time uncertainty corresponds to a combination of the first time uncertainty and a second time uncertainty, the second time uncertainty corresponding to a time uncertainty of reference time defined in reference time information.

14. A method comprising:

transmit a request for providing timing information to a terminal device identified as a relay terminal device for the apparatus; and
receiving information on a first time uncertainty estimated to be caused by the terminal device for sidelink communication or a combined time uncertainty from the terminal device, wherein the combined time uncertainty corresponds to a combination of the first time uncertainty and a second time uncertainty, the second time uncertainty corresponding to a time uncertainty of reference time defined in reference time information.

15. A computer program comprising instructions for causing an apparatus to perform at least the following:

transmit a request for providing timing information to a terminal device identified as a relay terminal device for the apparatus; and

receiving information on a first time uncertainty estimated to be caused by the terminal device for sidelink communication or a combined time uncertainty from the terminal device, wherein the combined time uncertainty corresponds to a combination of the first time uncertainty and a second time uncertainty, the second time uncertainty corresponding to a time uncertainty of reference time defined in reference time information.

16. An apparatus comprising:

at least one processor; and
at least one memory storing instructions that, when executed by the at least one processor, cause the apparatus at least to:

cause establishing a terminal device as a timing source terminal device;
estimate a first time uncertainty caused by the terminal device for sidelink communication; and
cause transmission of information on at least one of the first time uncertainty and a combined time uncertainty to one or more target terminal devices, wherein the combined time uncertainty corresponds to a combination of the first time uncertainty and a second time uncertainty, the second time uncertainty corresponding to a time uncertainty of reference time defined in reference time information.

106

UE ← 100

UE ← 102

AP/DU/ RELAY ← 104

114

110

CN

CU ← 108

IP/ SERVER/ DATA STORAGE ← 112

Fig. 1

201: Establish terminal device as timing source terminal device

202: Estimate first time uncertainty caused by terminal device

203: Cause transmitting of information on first time uncertainty or combined uncertainty to one or more target terminal devices

Fig. 2

```
┌────────────────────────────────────────────────────────────────┐
│        301: Receive request for timing information              │
└────────────────────────────────────────────────────────────────┘
                               │
                               ▼
┌────────────────────────────────────────────────────────────────┐
│   302: Establish terminal device as timing source terminal     │
│                  device based on request                        │
└────────────────────────────────────────────────────────────────┘
                               │
                               ▼
┌────────────────────────────────────────────────────────────────┐
│            303: Receive RTI from access node                    │
└────────────────────────────────────────────────────────────────┘
                               │
                               ▼
┌────────────────────────────────────────────────────────────────┐
│     304: Estimate one or more time uncertainty components       │
└────────────────────────────────────────────────────────────────┘
                               │
                               ▼
┌────────────────────────────────────────────────────────────────┐
│  305: Calculate first time uncertainty as combination of one    │
│    or more time uncertainty components and/or combined          │
│  uncertainty as combination of one or more time uncertainty     │
│        component and time uncertainty in RTI                    │
└────────────────────────────────────────────────────────────────┘
                               │
                               ▼
┌────────────────────────────────────────────────────────────────┐
│  306: Cause transmitting of information on first time           │
│  uncertainty or combined uncertainty to one or more target      │
│                   terminal devices                              │
└────────────────────────────────────────────────────────────────┘
```

Fig. 3

Fig. 4

Access node | 1st terminal device | 2nd terminal device | 3rd terminal device

501: Request for permission to complement time uncertainty

502: Receive

503: Allow complementing time uncertainty

504: Receive

505: Allow complementing time uncertainty

506: Receive

507: Transmit 1st combined time uncertainty

508: Receive

509: Allow complementing time uncertainty

510: Receive

511: Transmit 2nd combined time uncertainty

512: Receive

⋮

Fig. 5

Access node                                                    Terminal device

601: Transmit first and/or combined time uncertainty

602: Receive

603: Validate or
cause validation

604: Transmit results of validation

605: Receive

Fig. 6

701

| 710:<br>Tx/Rx | 720: Communication<br>control circuitry<br><br>721: SL time uncertainty<br>calculation circuitry<br><br>722: SL time uncertainty<br>requesting circuitry | 730: Memory<br><br>731:<br>Software<br><br>732:<br>Database |

Fig. 7

Europäisches Patentamt
European Patent Office
Office européen des brevets

# EUROPEAN SEARCH REPORT

**Application Number**

EP 22 15 6592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/324882 A1 (GULATI KAPIL [US] ET AL) 8 November 2018 (2018-11-08) <br> * figure 4 * <br> * paragraph [0076] – paragraph [0077] * <br> ----- | 1-16 | INV. <br> H04W56/00 |
| X | US 9 379 856 B2 (INTEL IP CORP [US]) 28 June 2016 (2016-06-28) <br> * section III * <br> * figure 4 * <br> ----- | 1-16 | |
| X | WO 2022/027298 A1 (QUALCOMM INC [US]; DAI JING [CN] ET AL.) 10 February 2022 (2022-02-10) <br> * paragraph [0005] – paragraph [0012] * <br> ----- | 10,11, 14,15 | |

**TECHNICAL FIELDS SEARCHED (IPC)**

H04W

The present search report has been drawn up for all claims

| Place of search | Date of completion of the search | Examiner |
|---|---|---|
| The Hague | 20 July 2022 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 6592

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2022

| Patent document cited in search report | | Publication date | Patent family member(s) | | Publication date |
|---|---|---|---|---|---|
| US 2018324882 | A1 | 08-11-2018 | CN | 110771257 A | 07-02-2020 |
| | | | EP | 3620031 A1 | 11-03-2020 |
| | | | TW | 201844026 A | 16-12-2018 |
| | | | US | 2018324882 A1 | 08-11-2018 |
| | | | WO | 2018204130 A1 | 08-11-2018 |
| US 9379856 | B2 | 28-06-2016 | CN | 105264797 A | 20-01-2016 |
| | | | CN | 105264842 A | 20-01-2016 |
| | | | CN | 105284158 A | 27-01-2016 |
| | | | CN | 105359438 A | 24-02-2016 |
| | | | CN | 105409146 A | 16-03-2016 |
| | | | CN | 105474716 A | 06-04-2016 |
| | | | CN | 106059702 A | 26-10-2016 |
| | | | CN | 107040868 A | 11-08-2017 |
| | | | EP | 3020149 A1 | 18-05-2016 |
| | | | EP | 3020150 A1 | 18-05-2016 |
| | | | EP | 3020154 A1 | 18-05-2016 |
| | | | EP | 3020170 A1 | 18-05-2016 |
| | | | EP | 3020228 A1 | 18-05-2016 |
| | | | EP | 3020237 A1 | 18-05-2016 |
| | | | EP | 3094147 A1 | 16-11-2016 |
| | | | EP | 3301987 A1 | 04-04-2018 |
| | | | ES | 2720583 T3 | 23-07-2019 |
| | | | HK | 1220052 A1 | 21-04-2017 |
| | | | HK | 1220054 A1 | 21-04-2017 |
| | | | HK | 1220070 A1 | 21-04-2017 |
| | | | HK | 1221083 A1 | 19-05-2017 |
| | | | HK | 1222482 A1 | 30-06-2017 |
| | | | HK | 1223483 A1 | 28-07-2017 |
| | | | HU | E043225 T2 | 28-08-2019 |
| | | | JP | 6144827 B2 | 07-06-2017 |
| | | | JP | 6445081 B2 | 26-12-2018 |
| | | | JP | 2016526822 A | 05-09-2016 |
| | | | JP | 2017135757 A | 03-08-2017 |
| | | | KR | 20160030884 A | 21-03-2016 |
| | | | KR | 20180034713 A | 04-04-2018 |
| | | | TW | 201517583 A | 01-05-2015 |
| | | | TW | 201707428 A | 16-02-2017 |
| | | | US | 2015009875 A1 | 08-01-2015 |
| | | | US | 2015009903 A1 | 08-01-2015 |
| | | | US | 2015009948 A1 | 08-01-2015 |
| | | | US | 2015009949 A1 | 08-01-2015 |
| | | | US | 2015009964 A1 | 08-01-2015 |
| | | | US | 2015009975 A1 | 08-01-2015 |
| | | | US | 2016226600 A1 | 04-08-2016 |
| | | | US | 2016286508 A1 | 29-09-2016 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 15 6592

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2022

| Patent document cited in search report | Publication date | Patent family member(s) | | Publication date |
|---|---|---|---|---|
| | | US 2017041109 A1 | | 09-02-2017 |
| | | US 2017251425 A1 | | 31-08-2017 |
| | | US 2018034601 A1 | | 01-02-2018 |
| | | US 2018152270 A1 | | 31-05-2018 |
| | | US 2019363845 A1 | | 28-11-2019 |
| | | WO 2015006082 A1 | | 15-01-2015 |
| | | WO 2015006119 A1 | | 15-01-2015 |
| | | WO 2015006218 A1 | | 15-01-2015 |
| | | WO 2015006229 A1 | | 15-01-2015 |
| | | WO 2015006256 A1 | | 15-01-2015 |
| | | WO 2015006289 A1 | | 15-01-2015 |
| WO 2022027298 A1 | 10-02-2022 | NONE | | |

For more details about this annex : see Official Journal of the European Patent Office, No. 12/82

EPO FORM P0459

page 2 of 2